# EUROPEAN PATENT SPECIFICATION

(11) **EP 4 217 551 B1**
(45) Date of publication and mention of the grant of the patent: **17.07.2024**
(21) Application number: 21839283.5
(22) Date of filing: 25.11.2021
(51) Int. Cl.: E04C 3/04, E04B 1/58, E04C 3/07, F16B 7/18

(54) **MOUNTING PROFILE**
MONTAGEPROFIL
PROFILÉ DE MONTAGE

(30) Priority: 08.03.2021 PL 43724521
(43) Date of publication of application: 02.08.2023
(73) Proprietor: Thale Sp. z o.o. Sp.k, 11-041 Olsztyn (PL)
(72) Inventor: NICZUK, Jakub, 10-187 Olsztyn (PL)
(74) Representative: Kuczynska, Teresa
(86) International application number: PCT/PL2021/000084
(87) International publication number: WO 2022/191722

(56) References cited:
- EP-A2- 1 640 524
- WO-A1-2016/154656

## Description

### Technical Field

The invention relates to a mounting profile for supporting installations used in construction.

### Background Art

From publication EP 1 640 524 A2 a construction module is known for making a support especially for pipelines. The module comprises a base element shaped as a closed profile which is provided on at least one side with fastening openings at fixed intervals for fastening at least one other base element and/or piece of equipment by means of fastening screws wherein the fastening screws cooperate during fastening with the fastening openings as tools for embossing or cutting threads. The fastening openings are positioned in embossed ribs. Thus, the embossed ribs, the fastening openings and the fastening screws are mutually compatible so that the fastening screws emboss or cut a thread in the fastening openings and in the side walls of the embossed ribs.

The solution known in the prior art does not solve the problem of security and durability of the connection between the profile and the fastened element. Between the profile and the fastened element there is a free space which is deformable and may damage the connection.

### Disclosure of Invention

A mounting profile according to the invention, formed of a longitudinal closed profile with a polygonal cross-section, having at least four side walls, comprising on at least one side wall a fastening assembly including two longitudinally extending outer rows of openings which are positioned at the longitudinal edges of the side wall, at least one longitudinally extending inner row of openings and at least two longitudinally extending embossed ribs directed inwardly the profile, is characterized in that the embossed ribs are positioned between the outer rows of openings and the inner row of openings.

Preferably, the outer row of openings includes circular openings and the inner row of openings includes circular openings and oblong openings.

Preferably, the circular openings and the oblong openings in the inner row of openings are arranged alternately.

Preferably, the oblong openings in the inner row of openings have a larger surface area in a plane perpendicular to the opening axis than the circular openings.

Preferably, the circular openings in the outer row of openings are equally spaced along the length of the profile.

Preferably, the circular openings in the outer rows of openings, positioned on the same side wall, are offset from each other in the longitudinal direction of the profile by a value equal to half the space between the circular openings.

Preferably, the circular openings in the outer row of openings and the circular openings in the inner row of openings are self-tapping screw openings.

Preferably, the outer rows of openings in the fastening assembly are positioned symmetrically to the inner row of openings. Preferably, the embossed ribs are positioned symmetrically to the inner row of openings.

Preferably, the mounting profile is formed of a longitudinal closed profile with a trapezoidal cross-section.

Preferably, the mounting profile is formed of a longitudinal closed profile with a rectangular cross-section.

Preferably, the mounting profile is formed of an oblong closed profile with a square cross-section.

Preferably, the mounting profile comprises one fastening assembly formed on the side wall associated to the longer trapezoidal base.

Preferably, the mounting profile formed of an oblong closed profile with a rectangular cross-section comprises two fastening assemblies, one on each of the two opposite side walls, wherein the fastening assemblies being formed on the side walls constituting the shorter sides of the rectangular cross section, or the fastening assemblies being formed on the side walls forming the longer sides of the rectangular cross-section.

Preferably, the mounting profile is formed of an oblong closed profile with a square cross-section and includes four fastening assemblies, one on each side wall.

Preferably, the mounting profile is formed of an oblong closed profile with a hexagonal cross-section, and includes two fastening assemblies, one on each of the two opposing side walls. Preferably, the mounting profile is formed of an oblong closed profile with a hexagonal cross-section, wherein the hexagon being a regular hexagon, and includes six fastening assemblies, one on each side wall

Preferably, the mounting profile is formed of an oblong closed profile with an octagonal cross-section.

Preferably, the mounting profile is formed of an oblong closed profile with an octagonal cross-section and includes four fastening assemblies, one on each side wall forming two pairs of opposing side walls.

Preferably, the mounting profile is formed of an oblong closed profile with an octagonal cross-section and includes eight fastening assemblies, one on each side wall.

The solution according to the invention allows for obtaining a profile with greater strength than the solution known in the prior art. The mounting profile adheres closely to the fastened element without free space at the connection point, which increases the safety and durability of the connection, and thus of the constructed structures.

Additionally, thanks to the use of longitudinal embossed ribs the cross-sectional area of the mounting profile increases (without changing the external dimensions), and thus increases bending and torsional strength of the profile.

The use of an internal row of openings allows the mounting profile to be joined with a fastened element also with a round head square neck bolt (a carriage bolt), thanks to which the mounting profile according to the present invention can be used in structures and installations existing on the market. Accordingly, the solution according to the invention is universal - it can be used both for the design of new systems and for the modernization or extension of the existing ones.

With a sufficiently dense perforation of the openings for self-tapping screws the mounting profile according to the invention gives the ease of configuring any connections of the structure and the ease of adjustment in the event of a change in the design input assumptions.

The use of openings for self-tapping screws, such as e.g. Taptite^{®} self-tapping screws, allows to significantly reduce the time needed for assembly (no drilling, threading) and does not require any additional processes such as welding.

The oblong openings placed in the inner row enable fastening with a self-tapping screw directly to the octagonal connector as well as pass-through suspension of the element to the profile by a round head square neck bolt (a carriage bolt), e.g. M10. Mounting of accessories to the profile using self-tapping screws is carried out only on one side without the need for using nuts. Mounting without the use of washers and nuts is also possible with the use of self-tapping screws with a serrated collar to prevent self-loosening. Accordingly, the mounting profile according to the invention is highly versatile and easy to handle.

### Brief Description of Drawings

The object of the invention is illustrated in embodiments in the drawing, in which
fig. 1 shows a perspective view of a first embodiment of a mounting profile according to the invention,
fig. 2 shows a cross-section of a first embodiment of a mounting profile according to the invention,
fig. 3 shows a perspective view of the second embodiment of a mounting profile according to the invention,
fig. 4 shows a cross-section of a second embodiment of a mounting profile according to the invention,
fig. 5 shows a perspective view of a third embodiment of a mounting profile according to the invention,
fig. 6 shows a cross-section of a third embodiment of a mounting profile according to the invention,
fig. 7 shows a perspective view of a fourth embodiment of a mounting profile according to the invention,
fig. 8 shows a cross-section of a fourth embodiment of a mounting profile according to the invention,
fig. 9 shows a perspective view of a fifth embodiment of a mounting profile according to the invention,
fig. 10 shows a cross-section of a fifth embodiment of a mounting profile according to the invention.
fig. 11 shows a perspective view of a sixth embodiment of a mounting profile according to the invention,
fig. 12 shows a cross-section of a sixth embodiment of a mounting profile according to the invention,
fig. 13 shows a perspective view of a seventh embodiment of a mounting profile according to the invention,
fig. 14 shows a cross-section of a seventh embodiment of a mounting profile according to the invention,
fig. 15 shows a perspective view of an eighth embodiment of a mounting profile according to the invention,
fig. 16 shows a cross-section of an eighth embodiment of a mounting profile according to the invention,
fig. 17 shows a perspective view of a ninth embodiment of a mounting profile according to the invention,
fig. 18 shows a cross-section of a ninth embodiment of a mounting profile according to the invention,
fig. 19 shows a perspective view of a tenth embodiment of a mounting profile according to the invention,
fig. 20 shows a cross-section of a tenth embodiment of a mounting profile according to the invention,

### Modes for Carrying Out the Invention

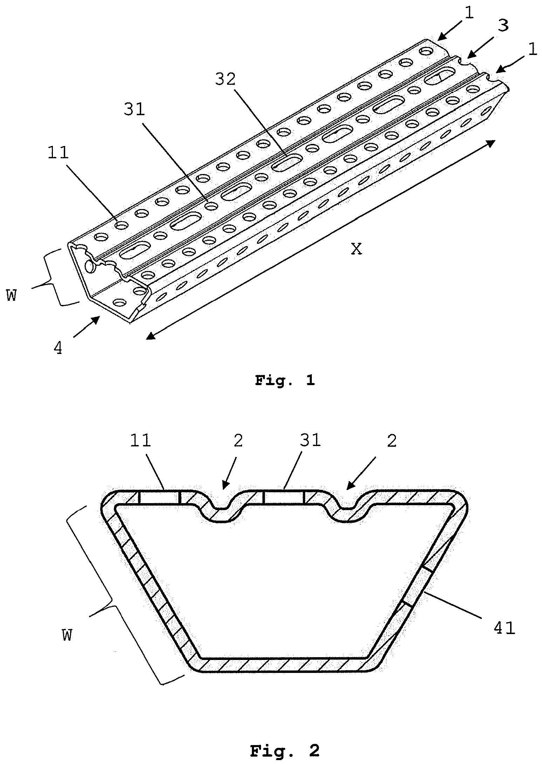

A first embodiment of a mounting profile according to the invention is shown in figures 1 and 2. The mounting profile is formed of a longitudinal closed profile with a trapezoidal cross-section having a longitudinal direction X extending parallel to the longitudinal edges of the profile. The arms of the trapezoidal cross-section have equal length.

The closed profile comprises four side walls W. The side wall W, which is the longer base of the trapezoidal cross-section, includes two longitudinally extending outer rows 1 of openings, one longitudinally extending inner row 3 of openings and two longitudinally extending embossed ribs 2. The directions in which the rows 1 and 3 extend are consistent with the longitudinal direction X.

The outer rows 1 of openings are positioned at the longitudinal edges of the side wall W, the inner row 3 of openings is positioned halfway the width of the side wall W, and the embossed ribs 2 are positioned between the outer rows 1 of openings and the inner row of openings. The outer rows 1 of openings and the embossed ribs 2 are arranged symmetrically on both sides with respect to the inner row 3 of openings. The outer rows 1 of openings are formed on the flat surface of the side wall W, between the embossed ribs 2 and the longitudinal edges of the mounting profile. The embossed ribs 2 are placed on the surface of the side wall W of the mounting profile and are directed towards the inside of the profile.

Two outer rows 1 of openings, one inner row 3 of openings and two embossed ribs 2, positioned relative to each other as described above, form the fastening assembly of the mounting profile. The first embodiment of the invention thus comprises one fastening assembly on one side wall W.

The outer rows 1 of openings include circular openings 11, while the inner row 3 of openings includes alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings, circular openings 11 are equally spaced along the profile. The circular openings 11 of the outer rows 1 are offset from each other in the longitudinal direction of the profile by a value equal to half the space between the circular openings 11. The circular openings 11, positioned in the outer row 1 of openings, and the circular openings 31, positioned in the inner row 3 of openings, are openings for self-tapping screws.

On the remaining side walls W the mounting profile according to the present embodiment comprises additional longitudinally extending rows 4 of circular openings 41. The directions in which the additional rows 4 extend are consistent with the longitudinal direction X.

Each of the additional rows 4 of openings is positioned in the half of the width of the side wall W.

Circular openings 41 are equally spaced along the profile. The circular openings 41, positioned on the opposite side walls W, constituting the arms of the trapezoidal cross-section, are offset from each other by a value equal to half the space between the circular openings 41. The circular openings 41, positioned in the additional row 4 of openings, are openings for self-tapping screws.

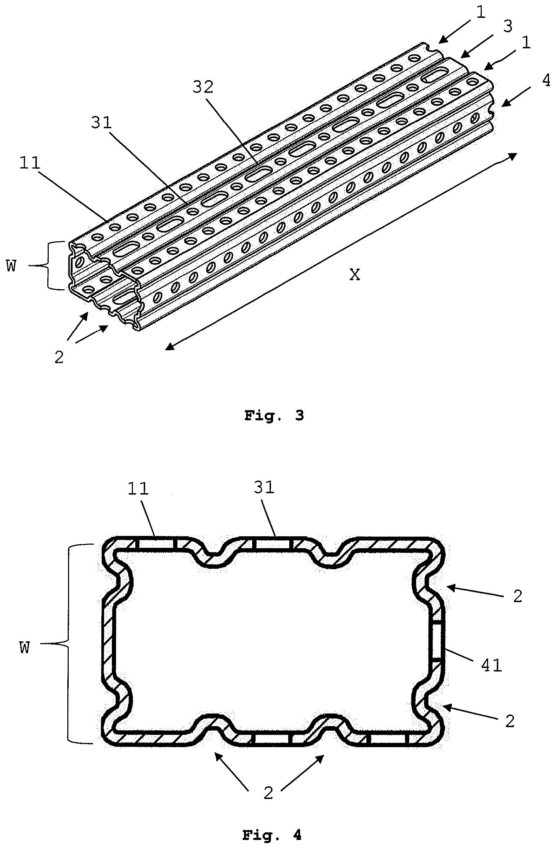

A second embodiment of a mounting profile according to the invention is shown in figures 3 and 4. The mounting profile is formed of a longitudinal closed profile with a rectangular cross-section having a longitudinal direction X extending parallel to the longitudinal edges of the profile.

The closed profile includes four side walls W.

The second embodiment of the invention includes two fastening assemblies, one on each of the opposing side walls W representing the longer sides of the rectangular cross section.

The outer rows 1 of openings include circular openings 11, while the inner row 3 of openings include alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings, circular openings 11 are equally spaced along the profile. The circular openings 11 of the outer rows 1, positioned on the same side wall W, are offset from each other in the longitudinal direction of the profile by a value equal to half the space between the circular openings 11. Likewise, the circular openings 11 of the opposite outer rows 1, positioned on the opposite side walls W, are also offset from each other in the longitudinal direction of the profile by a value equal to half the space between the circular openings 11. The circular openings 11 in the outer row 1 of openings and the circular openings 31 in the inner row 3 of openings are openings for self-tapping screws.

Each of the side walls W, being the shorter, opposite sides of the rectangular cross-section, comprises one additional longitudinally extending row 4 of circular openings 41 and two longitudinally extending embossed ribs 2. The directions in which the additional rows 4 of openings and the embossed ribs 2 extend are consistent with the longitudinal direction X.

The embossed ribs 2 are positioned at the longitudinal edges of the side wall W, while each of the additional rows 4 of openings is positioned in the half of the width of the side wall W.

In the additional row 4 of openings, circular openings 41 are equally spaced along the profile. Circular openings 41 of additional rows 4, positioned on opposite side walls W, are offset from each other in the longitudinal direction of the profile by a value equal to half the distance between them. The circular openings 41 contained in the additional row 4 of openings are self-tapping screw openings.

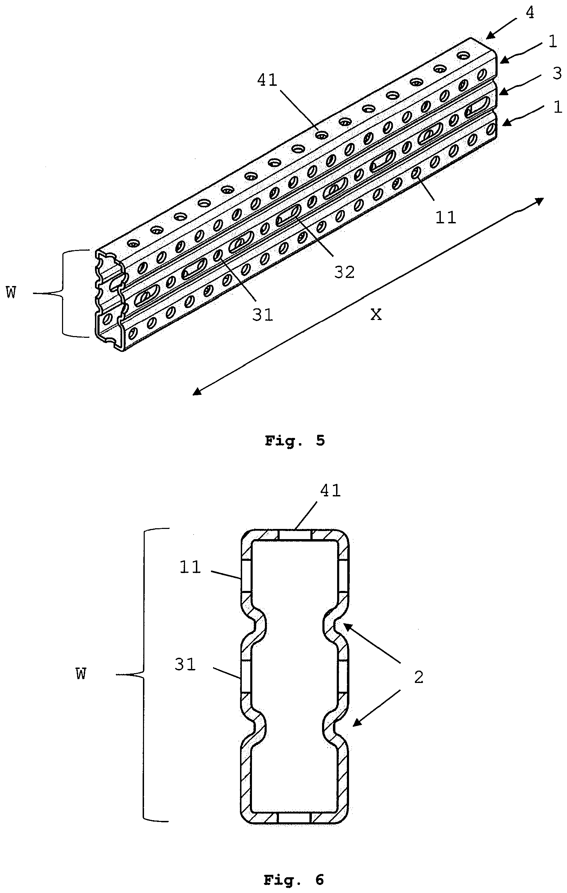

A third embodiment of a mounting profile according to the invention is shown in figures 5 and 6. The mounting profile is formed by a longitudinal closed profile with a rectangular cross-section having a longitudinal direction X extending parallel to the longitudinal edges of the profile.

The closed profile comprises four side walls W.

The third embodiment of the invention includes two fastening assemblies, one on each of the opposing side walls W representing the longer sides of the rectangular cross section.

The outer rows 1 of openings comprise circular openings 11, while the inner row 3 of openings comprises alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings, circular openings 11 are equally spaced along the profile. The circular openings 11 of the outer rows 1, located on the same side wall W, are offset from each other in the longitudinal direction of the profile by a value equal to half the space between the circular openings 11. The circular openings 11 of the opposite outer rows 1, positioned on the opposite side walls W, are not offset from each other in the longitudinal direction. The circular openings 11 in the outer row 1 of openings and the circular openings 31 in the inner row 3 of openings are openings for self-tapping screws.

Each of the side walls W, being the shorter, opposite sides of the rectangular cross-section, includes one additional longitudinally extending row 4 of circular openings 41. The extension directions of the additional rows 4 of openings follow the longitudinal direction X.

Additional rows 4 of openings are positioned in the middle of the width of the side walls W.

In the additional row 4 of openings, circular openings 41 are equally spaced along the profile. The circular openings 41 of additional rows 4, positioned on the opposite side walls W, are not offset from each other in the longitudinal direction of the profile. The circular openings 41 contained in the additional row 4 of openings are self-tapping screw openings.

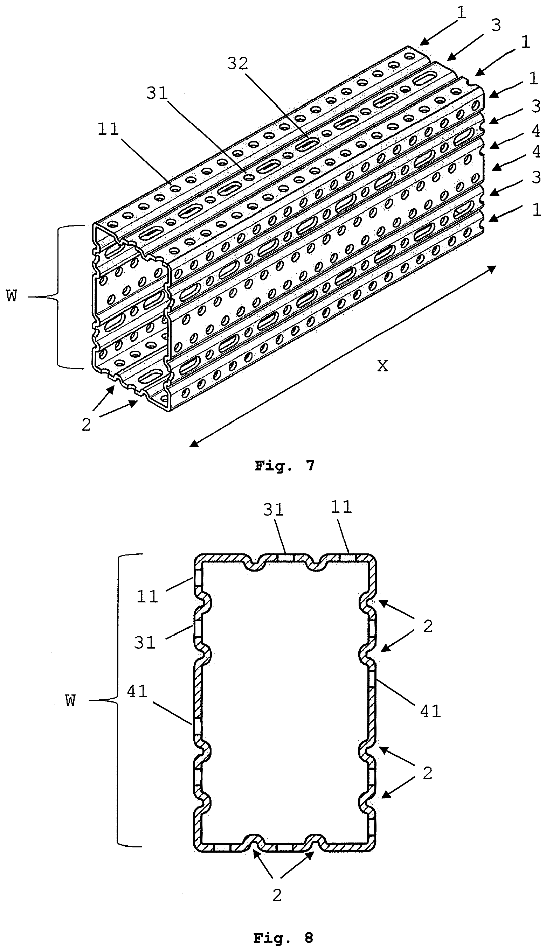

A fourth embodiment of a mounting profile according to the invention is shown in figures 7 and 8. The mounting profile is formed by a longitudinal closed profile with a rectangular cross-section having a longitudinal direction X extending parallel to the longitudinal edges of the profile.

The closed profile comprises four side walls W.

The fourth embodiment of the invention includes two fastening assemblies, one on each of the opposing side walls W representing the shorter sides of the rectangular cross section.

The outer rows 1 of openings include circular openings 11, while the inner row 3 of openings include alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings, circular openings 11 are equally spaced along the profile. The circular openings 11 of the outer rows 1, positioned on the same side wall W, are offset from each other in the longitudinal direction of the profile by a value equal to half the space between the circular openings 11. Likewise, the circular openings 11 of the opposite outer rows 1, positioned on the opposite side walls W, are also offset from each other in the longitudinal direction of the profile by a value equal to half the space between the circular openings 11. The circular openings 11 in the outer row 1 of openings and the circular openings 31 in the inner row 3 of openings are openings for self-tapping screws.

Each of the side walls W, constituting the longer, opposite sides of the rectangular cross-section, comprises two longitudinally extending outer rows 1 of openings, two longitudinally extending inner rows 3 of openings, four longitudinally extending embossed ribs 2 and two additional longitudinally extending rows 4 of openings. The directions in which the rows 1, 3 and 4 of openings and the embossed ribs extend are consistent with the longitudinal direction X.

The outer rows 1 of openings are positioned at the longitudinal edges of the side wall W, the additional rows 4 of openings are positioned next to each other substantially in the middle of the width of the side wall W, the inner rows 3 of openings are positioned between the outer rows 1 of openings and the additional rows 4 of openings, while the embossed ribs 2 are positioned between the outer rows 1 of openings and the inner rows 3 of openings and between the inner rows 3 of openings and additional rows 4 of openings.

In the additional row 4 of openings, the circular openings 41 are equally spaced along the profile. The circular openings 41 in the directly adjacent additional rows 4 of openings are offset from each other in the longitudinal direction of the profile by a value equal to half the space between the circular openings 41. Likewise, the openings of the additional rows 4, positioned on the opposite side walls W, are offset from each other in the longitudinal direction of the profile by a value equal to half the space between the circular openings 41. The circular openings 41 contained in the additional row 4 of openings are self-tapping screw openings.

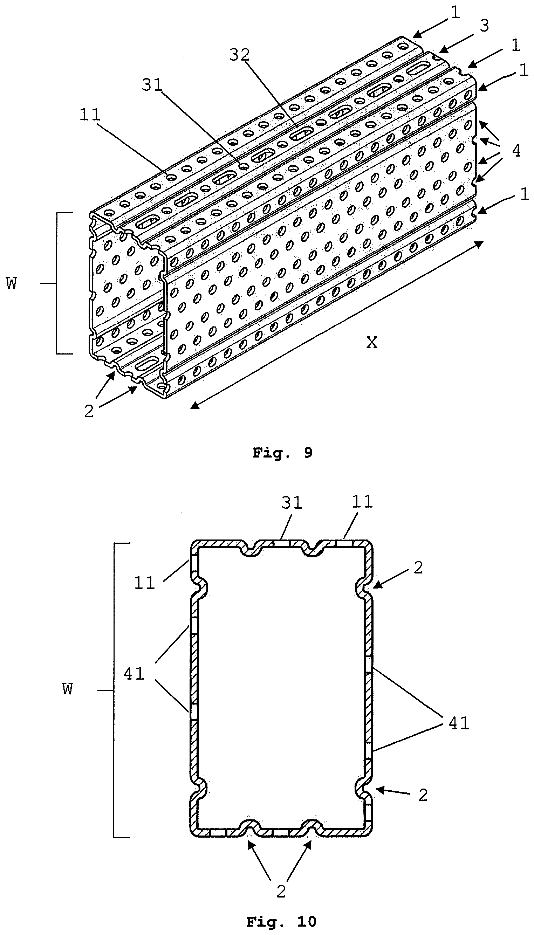

A fifth embodiment of a mounting profile according to the invention is shown in figures 9 and 10. The mounting profile is formed of a longitudinal closed profile with a rectangular cross-section having a longitudinal direction X extending parallel to the longitudinal edges of the profile.

The closed profile comprises four side walls W.

The fifth embodiment of the invention includes two fastening assemblies, one on each of the opposing side walls W representing the shorter sides of the rectangular cross section.

The outer rows 1 of openings include circular openings 11, while the inner row 3 of openings include alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings circular openings 11 are equally spaced along the profile. The circular openings 11 of the outer rows 1, located on the same side wall W, are offset from each other in the longitudinal direction of the profile by a value equal to half the space between the circular openings 11. Likewise, the circular openings 11 of the opposite outer rows 1, positioned on the opposite side walls W, are also offset from each other in the longitudinal direction of the profile by a value equal to half the space between the circular openings 11. The circular openings 11 in the outer row 1 of openings and the circular openings 31 in the inner row 3 of openings are openings for self-tapping screws.

Each of the side walls W constituting the longer, opposite sides of the rectangular cross-section, comprises two longitudinally extending outer rows 1 of openings, two longitudinally extending embossed ribs 2 and four additional longitudinally extending rows 4 of openings. The directions in which the rows 1 and 4 and embossed ribs 2 extend are consistent with the longitudinal direction X.

The outer rows 1 of openings are positioned at the longitudinal edges of the side wall W, the additional rows 4 of openings are positioned next to each other between the embossed ribs 2, while the embossed ribs 2 are positioned between the outer rows 1 of openings and the additional rows 4 of openings.

In the additional row 4 of openings, circular openings 41 are equally spaced along the profile. The circular openings 41 in the directly adjacent additional rows 4 of openings are offset from each other in the longitudinal direction of the profile by a value equal to half the space between the circular openings 41. The openings of the additional rows 4, positioned on the opposite side walls W, are offset from each other in the longitudinal direction of the profile by a value equal to half the space between the circular openings 41. The circular openings 41 contained in the additional row 4 of openings are self-tapping screw openings.

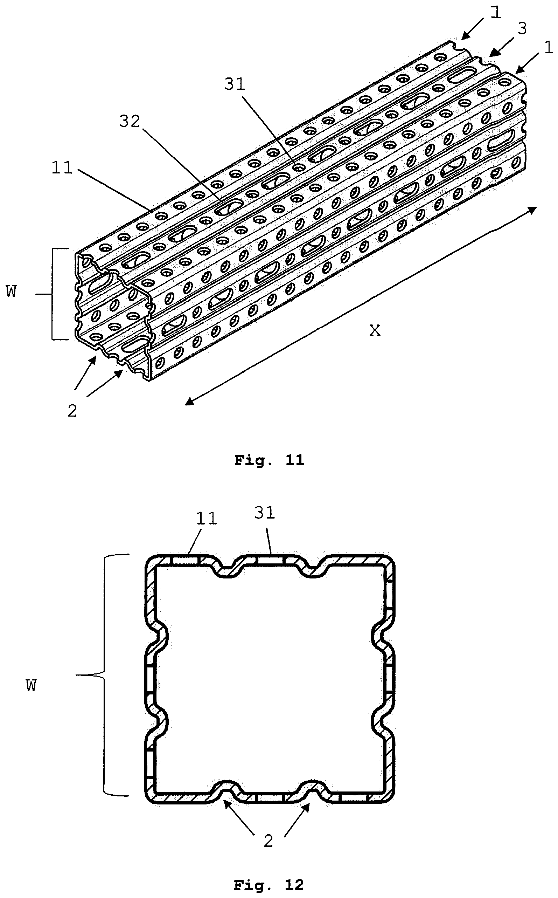

A sixth embodiment of a mounting profile according to the invention is shown in figures 11 and 12. The mounting profile is formed of a longitudinal closed profile with a square cross-section having a longitudinal direction X extending parallel to the longitudinal edges of the profile.

The closed profile comprises four side walls W.

A sixth embodiment of the invention includes four fastening assemblies, one on each side wall W.

The outer rows 1 of openings include circular openings 11, while the inner row 3 of openings includes alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings circular openings 11 are equally spaced along the profile. The circular openings 11 of the outer rows 1, located on the same side wall W, are offset from each other in the longitudinal direction of the profile by a value equal to half the space between the circular openings 11. Likewise, the circular openings 11 of the opposite outer rows 1, positioned on the opposite side walls W, are also offset from each other in the longitudinal direction of the profile by a value equal to half the space between the circular openings. The circular openings 11 in the outer row 1 of openings and the circular openings 31 in the inner row 3 of openings are openings for self-tapping screws.

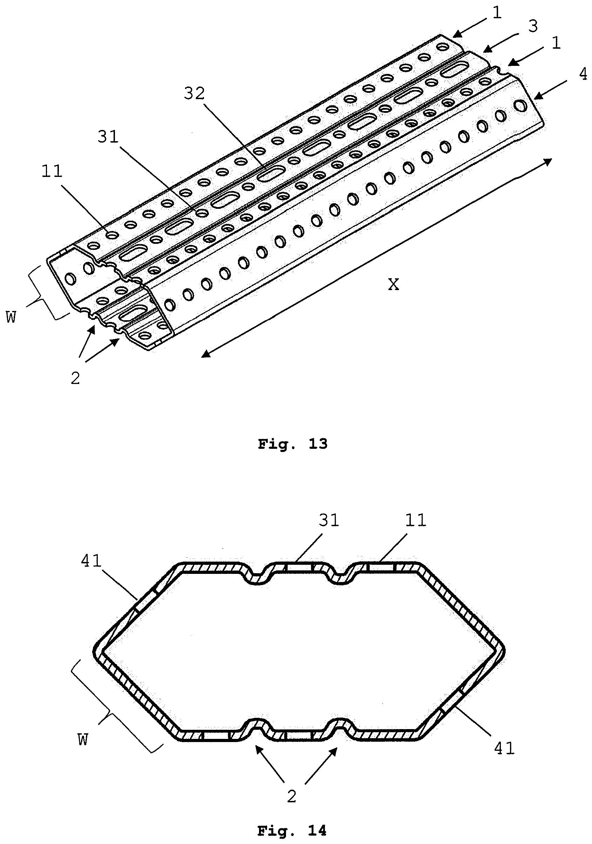

A seventh embodiment of a mounting profile according to the invention is shown in figures 13 and 14. The mounting profile is formed of a longitudinal closed profile with a hexagonal cross-section having a longitudinal direction X extending parallel to the longitudinal edges of the profile.

The closed profile comprises six side walls W.

A seventh embodiment of the invention includes two fastening assemblies, one on each of the opposing side walls W.

The outer rows 1 of openings comprise circular openings 11, while the inner row 3 of openings comprises alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings circular openings 11 are equally spaced along the profile. The openings of the outer rows 1, positioned on the same side wall W, are offset from each other in the longitudinal direction of the profile by a value equal to half the space between the circular openings 11. The circular openings 11 of the opposite outer rows 1, positioned on the opposite side walls W, are also offset from each other in the longitudinal direction by a value equal to half the space between the circular openings 11. The circular openings 11 in the outer row 1 of openings and the circular openings 31 in the inner row 3 of openings are openings for self-tapping screws.

On the remaining side walls W the mounting profile according to the present embodiment comprises additional longitudinally extending rows 4 of circular openings 41. The directions in which the additional rows 4 extend are consistent with the longitudinal direction X.

Additional rows 4 of openings are positioned in the middle of the width of the side walls W.

The circular openings 41 are equally spaced along the profile. The circular openings 41, positioned in additional rows 4 of openings on the adjacent side walls W, are offset from each other in the longitudinal direction by a value equal to half the space between the circular openings 41. The circular openings 41, positioned in additional rows 4 of openings on the opposite side walls W, are not offset from each other. The circular openings 41, positioned in the additional row 4 of openings, are openings for self-tapping screws.

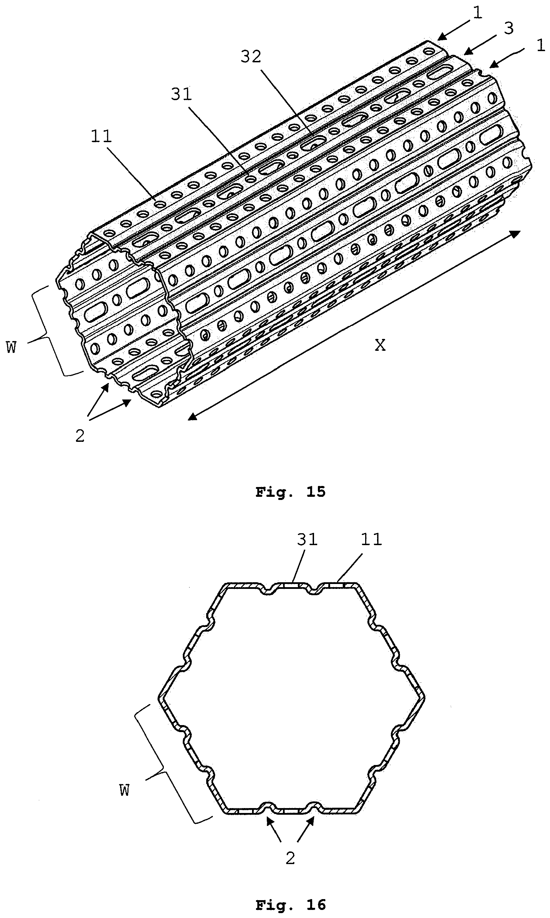

An eighth embodiment of a mounting profile according to the invention is shown in figures 15 and 16.

The mounting profile is formed of a longitudinal closed profile with a cross-section in the shape of regular hexagon having a longitudinal direction X extending parallel to the longitudinal edges of the profile.

The closed profile comprises six side walls W.

An eighth embodiment of the invention includes four fastening assemblies, one on each side wall W.

The outer rows 1 of openings include circular openings 11, while the inner row 3 of openings includes alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings circular openings 11 are equally spaced along the profile. The circular openings 11 of the outer rows 1, positioned on the same side wall W, are offset from each other in the longitudinal direction of the profile by a value equal to half the space between the circular openings 11. Likewise, the circular openings 11 of the opposite outer rows 1, positioned on the opposite side walls W, are also offset from each other in the longitudinal direction of the profile by a value equal to half the space between the circular openings 11. The circular openings 11, positioned in the outer row 1 of openings, and the circular openings 31, positioned in the inner row 3 of openings, are openings for self-tapping screws.

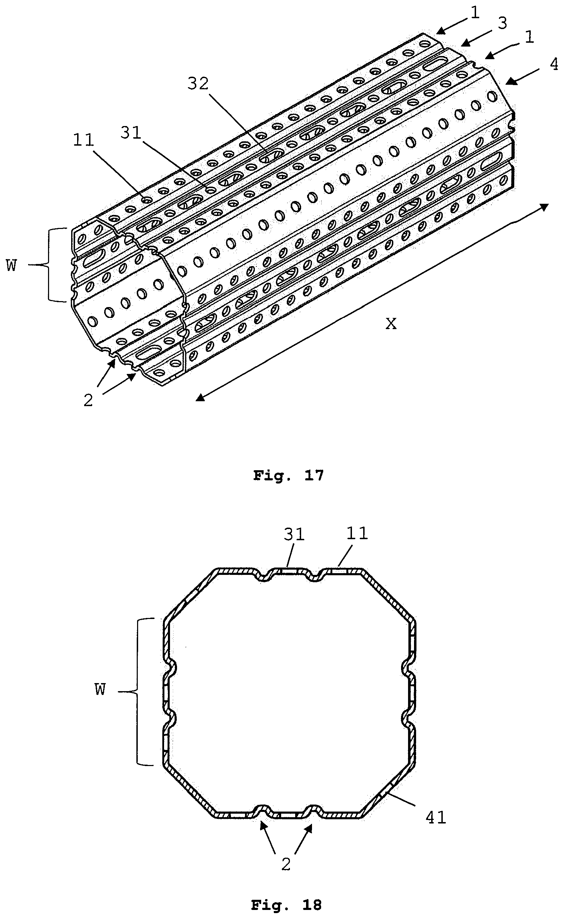

A ninth embodiment of a mounting profile according to the invention is shown in figures 17 and 18. The mounting profile is formed of a longitudinal closed profile with an octagonal cross-section having a longitudinal direction X extending parallel to the longitudinal edges of the profile.

The closed profile comprises eight side walls W.

A ninth embodiment of the invention includes four fastening assemblies, one on each side wall W, constituting two pairs of parallel side walls W.

The outer rows 1 of openings include circular openings 11, while the inner row 3 of openings includes alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings circular openings 11 are equally spaced along the profile. The circular openings 11 of the outer rows 1 are offset from each other in the longitudinal direction of the profile by a value equal to half the space between the circular openings 11. The circular openings 11, positioned in the outer row 1 of openings, and the circular openings 31, positioned in the inner row 3 of openings, are openings for self-tapping screws.

On the remaining side walls W the mounting profile according to the present embodiment comprises additional longitudinally extending rows 4 of circular openings 41. The directions in which the additional rows 4 extend are consistent with the longitudinal direction X.

Additional rows 4 of openings are positioned in the middle of the width of the side walls W.

The circular openings 41 are equally spaced along the profile. The circular openings 41, positioned on the opposite side walls W, are offset from each other by a value equal to half the space between the circular openings 41. The circular openings 41, positioned in the additional row 4 of openings, are openings for self-tapping screws.

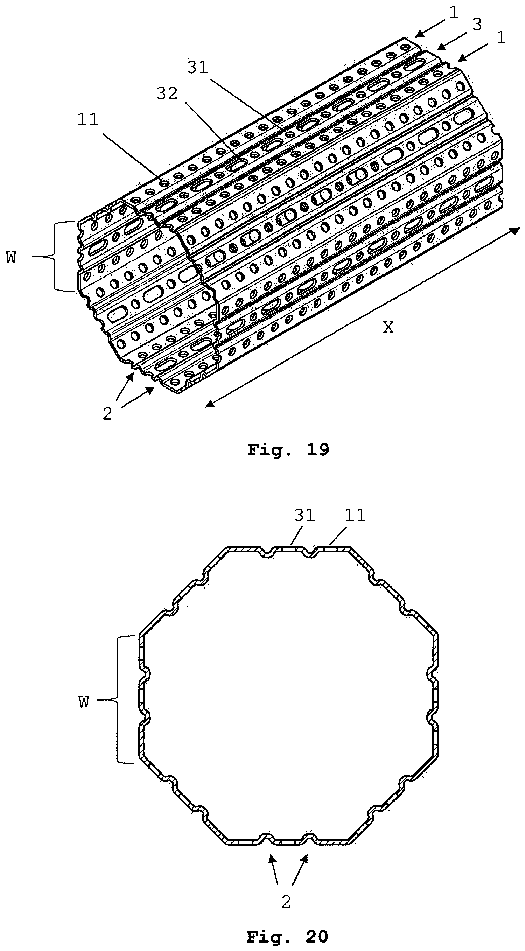

A tenth embodiment of a mounting profile according to the invention is shown in figures 19 and 20. The mounting profile is formed of a longitudinal closed profile with a cross-section in the shape of a regular octagon having a longitudinal direction X extending parallel to the longitudinal edges of the profile.

The closed profile comprises eight side walls W.

A tenth embodiment of the invention includes eight fastening assemblies, one on each side wall W.

The outer rows 1 of openings include circular openings 11, while the inner row 3 of openings includes alternately placed circular openings 31 and oblong openings 32. The oblong openings 32 have a larger surface area in the plane perpendicular to the opening axis than the circular openings 31. Moreover, the dimension of the oblong openings 32 in the direction perpendicular to the longitudinal direction X of the mounting profile is greater than the diameter of the circular openings 31. In the outer row 1 of openings circular openings 11 are equally spaced along the profile. The circular openings 11 of the outer rows 1, positioned on the same side wall W, are offset from each other in the longitudinal direction of the profile by a value equal to half the space between the circular openings 11. Likewise, the circular openings 11 of the opposite outer rows 1, positioned on the opposite side walls W, are also offset from each other in the longitudinal direction of the profile by a value equal to half the space between the circular openings 11. The circular openings 11, positioned in the outer row 1 of openings, and the circular openings 31, positioned in the inner row 3 of openings, are openings for self-tapping screws.

### Industrial Applicability

The solution according to the present invention is used in construction, in particular in pipeline support installations, in a wide range of loads, for industry for fastening technological installations, as support structures with a large span of beams for various types of exchangers, fans, air conditioners, as independent building structures or their components, for building vertical and horizontal platforms and pedestrian paths, and also for outdoor applications.

The invention according to the second and third embodiment has a particularly advantageous application as a light-load bearing profile, a profile for mounting sprinkler systems, fire protection installations, as a strut, bracing, stiffening, for large spans of the structure, high supports but low loads, for mounting advertising on roofs and facades. It is also planned to use in mounting ventilated facades as an element of the supporting structure.

The invention according to the fourth and fifth embodiment is particularly advantageous as a profile for heavy-duty loadbearing structures, in heavy industry installations, as a structural profile for noise barriers, as a structural profile for the construction of small flyovers for e.g. pipelines. Due to long life, non-flammability and good protection against fungi and insects, it is also intended to be used as a structural profile for custom-made houses with an area of less than 35 m².

The invention according to the eighth embodiment has a particularly advantageous application in the case of three-dimensional structures with a horizontal projection in the shape of a cuboid and an angle of 60 degrees as a structural column, trellis trusses with a triangular cross-section and for mounting installations in the corners of industrial halls.

The invention according to the ninth embodiment has a particularly advantageous application in the case of three-dimensional structures with a rectangular plan view as a structural column and when high stiffness of high structures is required.

The invention according to the tenth embodiment has a particularly advantageous application in the case of three-dimensional structures with a rectangular plan view and an angle of 45 degrees as a structural column.

## Claims

1. Mounting profile formed by a longitudinal closed profile with a polygonal cross-section, having at least four side walls (W), comprising on at least one side wall (W) a fastening assembly including two longitudinally extending outer rows (1) of openings which are positioned at the longitudinal edges of the side wall (W), at least one longitudinally extending inner row (3) of openings and at least two longitudinally extending embossed ribs (2) directed inwardly the profile **characterized in that** the embossed ribs (2) are positioned between the outer rows (1) of openings and the inner row (3) of openings.

2. Profile according to claim 1, **characterized in that** the outer row (1) of openings includes circular openings (11) and the inner row (3) of openings includes circular openings (31) and oblong openings (32).

3. Profile according to claim 2, **characterized in that** the circular openings (31) and the oblong openings (32) in the inner row (3) of openings are arranged alternately.

4. The profile according to claim 2 or 3, **characterized in that** the oblong openings (32) in the inner row (3) of openings have a larger surface area in the plane perpendicular to the opening axis than the circular openings (31) .

5. Mounting profile according to claim 2, **characterized in that** the circular openings (11) in the inner row (1) of openings are equally spaced along the length of the profile.

6. Mounting profile according to claim 5, **characterized in that** the circular openings (11) of the outer rows (1) of openings arranged on the same side wall (W) are offset relative to each other in the longitudinal direction of the profile by a value equal to half the space between the circular openings (11).

7. Mounting profile according to any of claims 2 to 6, **characterized in that** the circular openings (11) of the outer row (1) of openings and the circular openings (31) of the inner row (3) of openings are openings for self-tapping screws.

8. Mounting profile according to any one of claims 1 to 7, **characterized in that** the outer rows (1) of openings in the fastening assembly are positioned symmetrically relative to the inner row (3) of openings.

9. Mounting profile according to any of claims 1 to 8, **characterized in that** the embossed ribs (2) are positioned symmetrically relative to the inner row (3) of openings.

10. Mounting profile according to claim 1, **characterized in that** it is formed of a longitudinal closed profile with a trapezoidal cross-section.

11. Mounting profile according to claim 1, **characterized in that** it is formed of a longitudinal closed profile with a rectangular cross-section.

12. Mounting profile according to claim 1, **characterized in that** it is formed of a longitudinal closed profile with a square cross-section.

13. Mounting profile according to claim 10, **characterized in that** it comprises one fastening assembly formed on a side wall (W) associated with the longer base of the trapezoid.

14. Mounting profile according to claim 11, **characterized in that** it comprises two fastening assemblies, one on each of the two opposite side walls (W).

15. Mounting profile according to claim 14, **characterized in that** the fastening assemblies are formed on side walls (W) that constitute the shorter sides of the rectangular cross-section.

16. Mounting profile according to claim 14, **characterized in that** the fastening assemblies are formed on side walls (W) that constitute the longer sides of the rectangular cross-section.

17. Mounting profile according to claim 12, **characterized in that** it comprises four fastening assemblies, one on each of side walls (W).

18. Mounting profile according to claim 1, **characterized in that** it is formed of a longitudinal closed profile with a hexagonal cross-section.

19. Mounting profile according to claim 18, **characterized in that** it comprises two fastening assemblies, one on each of the two opposite side walls (W).

20. Mounting profile according to claim 18, **characterized in that** the hexagon is a regular hexagon.

21. Mounting profile according to claim 20, **characterized in that** it comprises six fastening assemblies, one on each of side walls (W).

22. Mounting profile according to claim 1, **characterized in that** it is formed of a longitudinal closed profile with an octagonal cross-section.

23. Mounting profile according to claim 22, **characterized in that** it comprises four fastening assemblies, one on each of the side walls (W) forming two pairs of opposing side walls (W) .

24. Mounting profile according to claim 22, **characterized in that** the octagon is a regular octagon.

25. Mounting profile according to claim 24, **characterized in that** it comprises eight fastening assemblies, one on each of side walls (W).

## Patentansprüche

1. Montageprofil, das aus einem länglichen, geschlossenen Profil mit polygonalem Querschnitt gebildet ist und mindestens vier Seitenwände (W) aufweist, wobei das Montageprofil an mindestens einer Seitenwand (W) eine Befestigungsanordnung umfasst, die zwei in Längsrichtung verlaufende, an den Längskanten der Seitenwand (W) angeordnete äußere Lochreihen (1), mindestens eine in Längsrichtung verlaufende innere Lochreihe (3) und mindestens zwei in Längsrichtung verlaufende, zum Inneren des Profils gerichtete Prägungen (2) umfasst, **dadurch gekennzeichnet, dass** die Prägungen (2) zwischen den äußeren Lochreihen (1) und der inneren Lochreihe (3) angeordnet sind.

2. Montageprofil nach Anspruch 1, **dadurch gekennzeichnet, dass** die äußere Lochreihe (1) kreisrunde Löcher (11) und die innere Lochreihe (3) kreisrunde Löcher (31) und längliche Löcher (32) aufweist.

3. Montageprofil nach Anspruch 2, **dadurch gekennzeichnet, dass** die kreisrunde Löcher (31) und die längliche Löcher (32) der inneren Lochreihe (3) abwechselnd angeordnet sind.

4. Montageprofil nach Anspruch 2 oder 3, **dadurch gekennzeichnet, dass** die längliche Löcher (32) der inneren Lochreihe (3) in der Ebene senkrecht zur Lochachse eine größere Fläche als die kreisrunde Löcher (31) aufweisen.

5. Montageprofil nach Anspruch 2, **dadurch gekennzeichnet, dass** die kreisrunde Löcher (11) der äußeren Lochreihe (1) in gleichmäßigen Abständen über die Länge des Profils verteilt sind.

6. Montageprofil nach Anspruch 5, **dadurch gekennzeichnet, dass** die kreisrunde Löcher (11) der äußeren auf derselben Seitenwand (W) angeordneten Lochreihen (1) in Profillängsrichtung um den halben Abstand der kreisrunde Löcher (11) zueinander versetzt sind.

7. Montageprofil nach einem der Ansprüche 2 bis 6, **dadurch gekennzeichnet, dass** die kreisrunde Löcher (11) der äußeren Lochreihe (1) und die kreisrunde Löcher (31) der inneren Lochreihe (3) Löcher für Gewinde bildende Schrauben sind.

8. Montageprofil nach einem der Ansprüche 1 bis 7, **dadurch gekennzeichnet, dass** die äußeren Lochreihen (1) der Befestigungsanordnung symmetrisch zur inneren Lochreihe (3) angeordnet sind.

9. Montageprofil nach einem der Ansprüche 1 bis 8, **dadurch gekennzeichnet, dass** die Prägungen (2) symmetrisch zur inneren Lochreihe (3) angeordnet sind.

10. Montageprofil nach Anspruch 1, **dadurch gekennzeichnet, dass** es aus einem länglichen geschlossenen Profil mit trapezförmigem Querschnitt gebildet ist.

11. Montageprofil nach Anspruch 1, **dadurch gekennzeichnet, dass** es aus einem länglichen geschlossenen Profil mit rechteckigem Querschnitt gebildet ist.

12. Montageprofil nach Anspruch 1, **dadurch gekennzeichnet, dass** es aus einem länglichen geschlossenen Profil mit quadratischem Querschnitt gebildet ist.

13. Montageprofil nach Anspruch 10, **dadurch gekennzeichnet, dass** es eine Befestigungsanordnung umfasst, die an einer der längeren Basis des Trapezes zugeordneten Seitenwand (W) ausgebildet ist.

14. Montageprofil nach Anspruch 11, **dadurch gekennzeichnet, dass** es zwei jeweils an einer der beiden gegenüberliegenden Seitenwände (W) angeordnete Befestigungsanordnungen umfasst.

15. Montageprofil nach Anspruch 14, **dadurch gekennzeichnet, dass** die Befestigungsanordnungen an Seitenwänden (W) ausgebildet sind, die die kürzeren Seiten des rechteckigen Querschnitts bilden.

16. Montageprofil nach Anspruch 14, **dadurch gekennzeichnet, dass** die Befestigungsanordnungen an Seitenwänden (W) ausgebildet sind, die die längeren Seiten des rechteckigen Querschnitts bilden.

17. Montageprofil nach Anspruch 12, **dadurch gekennzeichnet, dass** es vier, jeweils an einer der Seitenwände (W) angeordnete Befestigungsanordnungen umfasst.

18. Montageprofil nach Anspruch 1, **dadurch gekennzeichnet, dass** es aus einem länglichen geschlossenen Profil mit sechseckigem Querschnitt gebildet ist.

19. Montageprofil nach Anspruch 18, **dadurch gekennzeichnet, dass** es zwei jeweils an einer der beiden gegenüberliegenden Seitenwände (W) angeordnete Befestigungsanordnungen umfasst.

20. Montageprofil nach Anspruch 18, **dadurch gekennzeichnet, dass** der Sechseck ein regelmäßiges Sechseck ist.

21. Montageprofil nach Anspruch 20, **dadurch gekennzeichnet, dass** es sechs, jeweils an einer der Seitenwände (W) angeordnete Befestigungsanordnungen umfasst.

22. Montageprofil nach Anspruch 1, **dadurch gekennzeichnet, dass** es aus einem länglichen geschlossenen Profil mit achteckigem Querschnitt gebildet ist.

23. Montageprofil nach Anspruch 22, **dadurch gekennzeichnet, dass** es vier Befestigungsanordnungen umfasst, die jeweils an einer der zwei Paare gegenüberliegender Seitenwände (W) bildenden Seitenwände (W) angeordnet sind.

24. Montageprofil nach Anspruch 22, **dadurch gekennzeichnet, dass** das Achteck ein regelmäßiges Achteck ist.

25. Montageprofil nach Anspruch 24, **dadurch gekennzeichnet, dass** es acht, jeweils an einer der Seitenwände (W) angeordnete Befestigungsanordnungen umfasst.

## Revendications

1. Profilé de montage constitué d'un profilé fermé longitudinal à section transversale polygonale, présentant au moins quatre parois latérales (W), comprenant sur au moins une paroi latérale (W) un ensemble de fixation comportant deux rangées extérieures (1) d'ouvertures s'étendant longitudinalement, lesquelles sont situées près des bords longitudinaux de la paroi latérale (W), au moins une rangée intérieure (3) d'ouvertures s'étendant longitudinalement ainsi que au moins deux emboutissages (2) s'étendant longitudinalement et dirigés vers l'intérieur du profilé, **caractérisé en ce que** les emboutissages (2) sont situés entre les rangées extérieures (1) d'ouvertures et la rangée intérieure (3) d'ouvertures.

2. Profilé selon la revendication 1, **caractérisé en ce que** la rangée extérieure (1) d'ouvertures comporte des ouvertures rondes (11), et la rangée intérieure (3) d'ouvertures comporte des ouvertures rondes (31) et des ouvertures oblongues (32).

3. Profilé selon la revendication 2, **caractérisé en ce que** dans la rangée intérieure (3) d'ouvertures, les ouvertures rondes (31) et les ouvertures oblongues (32) sont disposées en alternance.

4. Profilé selon la revendication 2 ou 3, **caractérisé en ce que** dans la rangée intérieure (3) d'ouvertures, les ouvertures oblongues (32) ont une superficie plus grande dans le plan perpendiculaire à l'axe de l'ouverture que les ouvertures rondes (31).

5. Profilé de montage selon la revendication 2, **caractérisé en ce que** dans la rangée extérieure (1) d'ouvertures, les ouvertures rondes (11) sont disposées à intervalles réguliers le long de la longueur du profilé.

6. Profilé de montage selon la revendication 5, **caractérisé en ce que** les ouvertures rondes (11) des rangées extérieures (1) d'ouvertures situées sur la même paroi latérale (W) sont décalées l'une par rapport à l'autre dans la direction longitudinale du profilé d'une valeur égale à la moitié de l'intervalle entre les ouvertures rondes (11).

7. Profilé de montage selon l'une quelconque des revendications 2 à 6, **caractérisé en ce que** les ouvertures rondes (11) de la rangée extérieure (1) d'ouvertures et les ouvertures rondes (31) de la rangée intérieure (3) d'ouvertures sont des ouvertures pour des vis autotaraudeuses

8. Profilé de montage selon l'une quelconque des revendications 1 à 7, **caractérisé en ce que** dans l'ensemble de fixation les rangées extérieures (1) d'ouvertures sont disposées de façon symétrique par rapport à la rangée intérieure (3) d'ouvertures.

9. Profilé de montage selon l'une quelconque des revendications 1 à 8, **caractérisé en ce que** les emboutissages (2) sont disposées de façon symétrique par rapport à la rangée intérieure (3) d'ouvertures.

10. Profilé de montage selon la revendication 1, **caractérisé en ce qu'**il est constitué d'un profilé fermé longitudinal à section transversale trapézoïdale.

11. Profilé de montage selon la revendication 1, **caractérisé en ce qu'**il est constitué d'un profilé fermé longitudinal à section transversale rectangulaire.

12. Profilé de montage selon la revendication 1, **caractérisé en ce qu'**il est constitué d'un profilé fermé longitudinal à section transversale carrée.

13. Profilé de montage selon la revendication 10, **caractérisé en ce qu'**il comporte un ensemble de fixation réalisé sur la paroi latérale (W) liée avec la base plus longue du trapèze.

14. Profilé de montage selon la revendication 11, **caractérisé en ce qu'**il comporte deux ensembles de fixation, à savoir un sur chaque des deux parois latérales (W) opposées.

15. Profilé de montage selon la revendication 14, **caractérisé en ce que** les ensembles de fixation sont réalisés sur les parois latérales (W) constituant les côtés courts de la section transversale rectangulaire.

16. Profilé de montage selon la revendication 14, **caractérisé en ce que** les ensembles de fixation sont réalisés sur les parois latérales (W) constituant les côtés longs de la section transversale rectangulaire.

17. Profilé de montage selon la revendication 12, **caractérisé en ce qu'**il comporte quatre ensembles de fixation, à savoir un sur chaque paroi latérale (W).

18. Profilé de montage selon la revendication 1, **caractérisé en ce qu'**il est constitué d'un profilé fermé longitudinal à section transversale hexagonale.

19. Profilé de montage selon la revendication 18, **caractérisé en ce qu'**il comporte deux ensembles de fixation, à savoir un sur chaque des deux parois latérales (W) opposées.

20. Profilé de montage selon la revendication 18, **caractérisé en ce que** l'hexagone est un hexagone régulier.

21. Profilé de montage selon la revendication 20, **caractérisé en ce qu'**il comporte six ensembles de fixation, à savoir un sur chaque paroi latérale (W).

22. Profilé de montage selon la revendication 1, **caractérisé en ce qu'**il est constitué d'un profilé fermé longitudinal à section transversale octogonale.

23. Profilé de montage selon la revendication 22, **caractérisé en ce qu'**il comporte quatre ensembles de fixation, à savoir un sur chaque paroi latérale (W) constituant deux paires des parois latérales (W) opposées.

24. Profilé de montage selon la revendication 22, **caractérisé en ce que** l'octogone est un octogone régulier.

25. Profilé de montage selon la revendication 24, **caractérisé en ce qu'**il comporte huit ensembles de fixation, à savoir un sur chaque paroi latérale (W).
